# EUROPEAN PATENT APPLICATION

(11) **EP 4 760 205 A1**
(43) Date of publication of application: **17.06.2026**
(21) Application number: 24855216.8
(22) Date of filing: 07.02.2024
(51) Int. Cl.: G01C 1/00

(54) **MEASUREMENT APPARATUS, CLAMP AND MEASUREMENT DEVICE**

(30) Priority: 23.08.2023 CN 202311073222
(71) Applicant: HUAWEI TECHNOLOGIES CO., LTD., Shenzhen 518129 (CN)
(72) Inventor: HOU, Xiaogang, Shenzhen, Guangdong 518129 (CN); LI, Long, Shenzhen, Guangdong 518129 (CN); GAO, Sa, Shenzhen, Guangdong 518129 (CN); YAO, Xu, Shenzhen, Guangdong 518129 (CN)
(74) Representative: Maiwald GmbH
(86) International application number: PCT/CN2024/076688
(87) International publication number: WO 2025/039482

(57) **Abstract**

A measurement apparatus (100), a fixture (200), and a measurement device (10) are provided, and relate to the field of measurement instruments, to resolve a problem of an inaccurate measurement result. The measurement apparatus (100) includes a main unit (110), a support assembly (120), and a receiving assembly (130). The support assembly (120) includes a first connecting rod (121) and a cable (122) that are connected to each other. The receiving assembly (130) includes a receiver (133), a signal processor (132), a second connecting rod (131), and a coaxial cable (134). The main unit (110) is electrically connected to the signal processor (132) through the cable (122). The receiver (133) is electrically connected to the signal processor (132) through the coaxial cable (134). The first connecting rod (121) is rotatably connected to the second connecting rod (131). One end that is of the cable (122) and that is away from the main unit (110) is electrically connected to the signal processor (132). The coaxial cable (134) does not cross a position at which the first connecting rod (121) is rotatably connected to the second connecting rod (131), and the coaxial cable (134) with a large bending radius may not be bent. A distance between the receiver (133) and the main unit (110) may be adjusted, to avoid blocking a signal of the receiver (133), so as to improve an anti-interference capability of the measurement apparatus (100) and accuracy of a measurement result.

## Description

This application claims priority to Chinese Patent Application No. 202311073222.1, filed with the China National Intellectual Property Administration on August 23, 2023 and entitled "MEASUREMENT APPARATUS, FIXTURE, AND MEASUREMENT DEVICE", which is incorporated herein by reference in its entirety.

### TECHNICAL FIELD

Embodiments of this application relate to the field of measurement instruments, and in particular, to a measurement apparatus, a fixture, and a measurement device.

### BACKGROUND

An installation attitude of an antenna of a base station has huge impact on surrounding signal coverage. After antenna installation is completed, the installation attitude needs to be measured, and whether the antenna installation needs to be adjusted and optimized is determined based on a measurement result. Therefore, accuracy of the measurement result directly affects use of the antenna.

### SUMMARY

Embodiments of this application provide a measurement apparatus, a fixture, and a measurement device, to resolve a problem of an inaccurate measurement result of an antenna.

To achieve the foregoing objective, the following technical solutions are used in this application.

According to a first aspect, an embodiment of this application provides a measurement apparatus. The measurement apparatus includes a main unit, a support assembly, and a receiving assembly. The support assembly includes a first connecting rod and a cable that are connected to each other. One end of the first connecting rod is connected to the main unit, and one end of the cable is electrically connected to the main unit. The receiving assembly includes a receiver, a signal processor, a second connecting rod, and a coaxial cable. The coaxial cable, the signal processor, and the receiver are all connected to the second connecting rod. One end of the coaxial cable is electrically connected to the receiver, and the other end is electrically connected to the signal processor. One end that is of the first connecting rod and that is away from the main unit is rotatably connected to the second connecting rod. One end that is of the cable and that is away from the main unit is electrically connected to the signal processor. Because one end of the coaxial cable is connected to the signal processor, and the other end is connected to the receiver, a signal received by the receiver may be transmitted to the signal processor. One end of the cable is electrically connected to the main unit, and the other end of the cable is electrically connected to the signal processor, so that the signal of the signal processor may be transmitted to the main unit. Because the first connecting rod is rotatably connected to the second connecting rod, the first connecting rod and the second connecting rod can be folded, to provide high flexibility and facilitate storage. In addition, a length of the first connecting rod and the second connecting rod that are in an expanded state is greater than a length of the first connecting rod and the second connecting rod that are in a folded state, and a distance between the receiver and the main unit may be adjusted by expanding or folding the first connecting rod and the second connecting rod. During use of the measurement apparatus, the first connecting rod and the second connecting rod may be expanded based on an obstacle (for example, a cable) that blocks the signal of the receiver at a base station, to adjust a position of the receiver, so as to avoid blocking the signal of the receiver, improve anti-electromagnetic interference and anti-blocking capabilities of the measurement apparatus, and improve accuracy of measurement data. In addition, generally, a bending radius of the coaxial cable is greater than a bending radius of the cable. The coaxial cable does not cross a position at which the first connecting rod is rotatably connected to the second connecting rod, and the coaxial cable may not be bent. The bending radius of the cable crossing the first connecting rod and the second connecting rod is small. In this way, a bending radius needed by the measurement apparatus in a folding process is small, so that a volume of the measurement apparatus can be reduced.

With reference to the first aspect, in some possible implementations, the first connecting rod includes a plurality of folding sections. Two adjacent folding sections are rotatably connected to each other. The main unit is connected to a head end of the plurality of folding sections. The second connecting rod is connected to a tail end of the plurality of folding sections. In this way, a length of the first connecting rod can be adjusted by rotating two adjacent folding sections, to further reduce the volume of the measurement apparatus, so that the measurement apparatus can be flexibly packed, transported, and moved to and from the base station. The receiver can avoid a main radiation region in front of an antenna, to improve anti-electromagnetic interference and anti-blocking capabilities of the measurement apparatus.

With reference to the first aspect, in some possible implementations, the first connecting rod includes a plurality of telescopic sections. Two adjacent telescopic sections are slidably connected to each other. The main unit is connected to a head end of the plurality of telescopic sections. The second connecting rod is connected to a tail end of the plurality of telescopic sections. In this way, a length of the first connecting rod can be adjusted by sliding two adjacent telescopic sections. This helps the receiver avoid a main radiation region in front of an antenna, to improve anti-electromagnetic interference and anti-blocking capabilities of the measurement apparatus.

With reference to the first aspect, in some possible implementations, the support assembly further includes an elastic member. Two opposite ends of the elastic member are both connected to the cable. When the elastic member is in a free state, the cable located between the two opposite ends of the elastic member is bent. When the first connecting rod and the second connecting rod are expanded from being in the folded state to being in the expanded state, the elastic member is stretched in the free state, and a bent portion that is of the cable and that is located between the two opposite ends of the elastic member is also stretched. In this way, a case in which the cable is broken or damaged because the cable is subject to an excessive force during expansion of the first connecting rod and the second connecting rod is avoided. In addition, the elastic member restricts movement of the cable, to avoid a case in which extension of the cable is affected by coiling of the cable.

With reference to the first aspect, in some possible implementations, the main unit includes a mounting surface and an assembly surface. The assembly surface is perpendicular to the mounting surface. A size of the mounting surface is L1 in a direction perpendicular to the assembly surface. A size of the assembly surface is L2 in a direction perpendicular to the mounting surface. L1 is not equal to L2. When a size of a position that is of the fixture and at which the measurement apparatus is installed is L2, the assembly surface may be installed at the foregoing position. Because L1 is not equal to L2, and the size of the mounting surface is not equal to the size of the position that is of the fixture and at which the measurement apparatus is installed, the mounting surface cannot be installed at the position that is of the fixture and at which the foregoing assembly surface is installed. This can avoid a case in which the mounting surface is attached to the position that is of the fixture and that is for attaching to the assembly surface, to avoid incorrect installation of the fixture and the main unit. In this way, L1 is not equal to L2, so that a fool-proof function is achieved.

With reference to the first aspect, in some possible implementations, both an extension direction of the first connecting rod and an extension direction of the second connecting rod are parallel to the mounting surface. During use of the measurement apparatus, the mounting surface is attached to one surface of the fixture, and any one of a first assembly surface, a second assembly surface, and a third assembly surface is attached to another surface of the fixture. In addition, because one end of the second connecting rod and the first connecting rod are connected to the second connecting rod to form a cantilever structure, and the receiver is located on the second connecting rod, gravity of the receiver causes the coaxial cable and the second connecting rod to have a downward bending moment. Because both the extension direction of the first connecting rod and the extension direction of the second connecting rod are parallel to the mounting surface, the bending moment has a component force only on the mounting surface, and a component force on a plane on which a downtilt exists is zero. This does not affect a value of the downtilt measured by the receiver, so that the measurement is accurate.

With reference to the first aspect, in some possible implementations, the main unit further includes a positioning part. The positioning part is connected to the assembly surface. A distance between the positioning part and the mounting surface is not equal to a distance between the positioning part and a surface that is of the main unit and that faces away from the mounting surface. The measurement apparatus is connected to the fixture through the positioning part, and the mounting surface is attached to the fixture. When the mounting surface is attached to the fixture, the positioning part is connected to the fixture. Because the distance between the positioning part and the mounting surface is not equal to the distance between the positioning part and the surface that is of the main unit and that faces away from the mounting surface, if the mounting surface faces away from and is not attached to the fixture, the positioning part cannot be connected to the fixture. Whether the measurement apparatus is correctly installed is determined depending on whether the positioning part can be connected to the fixture, so that the positioning part has a fool-proof function, to avoid an incorrect measurement result caused by an abnormal installation manner.

With reference to the first aspect, in some possible implementations, there are a plurality of assembly surfaces, and each of the assembly surfaces is perpendicular to the mounting surface. During use, the mounting surface is attached to a surface of the fixture, and any one of the assembly surfaces is attached to the fixture, so that the measurement apparatus and the fixture have a plurality of installation attitudes. An installation attitude may be selected based on an installation site, to better avoid an obstacle, for example, a cable, reduce interference, and improve accuracy of a measurement result.

With reference to the first aspect, in some possible implementations, the measurement apparatus further includes a support rod. One end of the support rod is rotatably connected to the first connecting rod, and the other end is detachably connected to the second connecting rod. Alternatively, one end of the support rod is rotatably connected to the second connecting rod, and the other end is detachably connected to the first connecting rod. When the first connecting rod and the second connecting rod are expanded to be in a working state, the support rod and the second connecting rod are connected to form a stable triangle between the support rod, the first connecting rod, and the second connecting rod, so as to avoid a case in which the signal received by the receiver is affected due to relative movement of the first connecting rod and the second connecting rod in a measurement process.

According to a second aspect, an embodiment of this application provides a measurement device. The measurement device includes a fixture and any one of the measurement apparatuses according to the first aspect, and the fixture is detachably connected to the measurement apparatus. Because the foregoing measurement apparatus has high anti-electromagnetic interference and anti-blocking capabilities, it is clear that the measurement device also has advantages of high anti-electromagnetic interference and anti-blocking capabilities and an accurate measurement result.

With reference to the second aspect, in some possible implementations, the fixture includes a fastening arm, a tray, and a connector. The fastening arm includes a first surface and a second surface that are disposed opposite to each other and parallel to each other. The tray is connected to the first surface. The connector is connected to the tray. A distance between the connector and the first surface is not equal to a distance between the connector and an end that is of the tray and that is away from the fastening arm. The main unit is detachably connected to the tray. When the main unit is connected to the tray, the main unit is attached to the first surface. When the main unit is connected to the tray, the main unit is attached to the first surface, and a mounting surface of the main unit is attached to the first surface. Because the distance between the connector and the first surface is not equal to the distance between the connector and the end that is of the tray and that is away from the fastening arm, when the mounting surface is attached to the first surface, the connector can be connected to a positioning part. If a surface that is of the main unit and that faces away from the mounting surface is attached to the first surface, the connector cannot be connected to the positioning part. In this way, whether the measurement apparatus and the fixture are correctly installed is determined depending on whether the connector can be connected to the positioning part, so that the connector has a fool-proof function, to avoid an incorrect measurement result caused by an abnormal installation manner.

With reference to the second aspect, in some possible implementations, the fastening arm includes a main arm and a secondary arm. Two opposite surfaces of the main arm are respectively the first surface and the second surface. The first surface and the second surface are respectively located on two opposite sides of the main arm. One end of the secondary arm is connected to the first surface, and the other end extends to a side of the second surface. There is a gap between the secondary arm and an end surface that is of the main arm and that is close to the secondary arm. Because there is the gap between the secondary arm and the end surface that is of the main arm and that is close to the secondary arm, the gap may accommodate a raised part at a corner of an antenna, to avoid poor attachment between the second surface and a measurement surface that is caused by existence of the raised part, and avoid an inaccurate detection result caused by the poor attachment. In addition, the raised part is located in the gap, so that wear on the raised part of the antenna can be mitigated, and wear on the corner of the antenna can be mitigated.

With reference to the second aspect, in some possible implementations, the fixture further includes a pad. An extension direction of the pad is parallel to the second surface. The pad is located on a side of the second surface of the main arm. A connecting end of the pad is detachably connected to the secondary arm. A free end of the pad is located on a side that is of the secondary arm and that is close to the main arm. Because the pad is located on the side of the second surface of the main arm, an antenna and the pad are located on a same side of the main arm. When the fixture is connected to the antenna, the free end of the pad abuts against the antenna. In this way, the pad enables the main arm and the secondary arm to move in the extension direction of the pad, and the tray and the main unit connected to the tray may also move in the extension direction of the pad, so that the main unit is away from the antenna, to avoid a case in which an obstacle such as a component near an the antenna, for example, a cable, blocks a signal of the measurement apparatus, so as to improve a measurement effect.

With reference to the second aspect, in some possible implementations, the fixture further includes a strap. One end of the strap is connected to one end that is of the main arm and that is away from the secondary arm, and the other end is detachably connected to one end that is of the secondary arm and that is away from the main arm. Alternatively, one end of the strap is connected to the end that is of the secondary arm and that is away from the main arm, and the other end is detachably connected to the end that is of the main arm and that is away from the secondary arm. Because the secondary arm and the main arm are of a rigid structure, in a binding process, the secondary arm and the main arm that are of the rigid structure may support the strap in winding around an outer periphery of the antenna, and assist in transferring one end of the strap to the other end. In this way, a problem that the flexible strap is not easily transferred due to a large size of the outer periphery of the antenna is effectively resolved. This may be applied to an antenna with a large perimeter, to improve mounting and dismounting efficiency.

With reference to the second aspect, in some possible implementations, the fixture further includes a stop part. The stop part is connected to the first surface. The stop part is located on a side of the tray. An end surface that is of the stop part and that faces the tray is perpendicular to the first surface. When the main unit is connected to the tray, the end surface that is of the stop part and that faces the tray is attached to the main unit. When the main unit is connected to the tray, a stop surface of the stop part can avoid a case in which the main unit and the tray slide relative to each other. The stop surface is attached to the main unit, so that a case in which the main unit tilts in a direction toward the stop surface or tilts in a direction away from the stop surface can be avoided, to improve accuracy of a measurement result. In addition, the stop surface of the stop part further has an indication function. In a process of connecting the main unit and the tray, the stop surface of the stop part abutting against and being attached to the main unit indicates a high degree of attachment between the main unit and the tray and a correct installation attitude, and this helps quick installation of the main unit.

According to a third aspect, an embodiment of this application provides a fixture. The fixture includes a fastening arm, a tray, and a connector. The fastening arm includes a first surface and a second surface that are disposed opposite to each other and parallel to each other. The tray is connected to the first surface. The connector is connected to the tray. A distance between the connector and the first surface is not equal to a distance between the connector and an end that is of the tray and that is away from the fastening arm.

When a main unit is connected to the tray, the main unit is attached to the first surface, and the connector is connected to the main unit. Because the distance between the connector and the first surface is not equal to the distance between the connector and the end that is of the tray and that is away from the fastening arm, when the mounting surface is attached to the first surface, the connector can be connected to the main unit. If a surface that is of the main unit and that faces away from the mounting surface is attached to the first surface, the connector cannot be connected to the main unit. In this way, whether the measurement apparatus and the fixture are correctly installed is determined depending on whether the connector can be connected to the main unit, so that the connector has a fool-proof function, to enable the fixture to have the fool-proof function, so as to avoid an incorrect measurement result caused by an abnormal installation manner.

With reference to the third aspect, in some possible implementations, the fastening arm includes a main arm and a secondary arm. Two opposite surfaces of the main arm are respectively the first surface and the second surface. The first surface and the second surface are respectively located on two opposite sides of the main arm. One end of the secondary arm is connected to the first surface, and the other end extends to a side of the second surface. There is a gap between the secondary arm and an end surface that is of the main arm and that is close to the secondary arm. Because there is the gap between the secondary arm and the end surface that is of the main arm and that is close to the secondary arm, the gap may accommodate a raised part at a corner of an antenna, to avoid poor attachment between the second surface and a measurement surface that is caused by existence of the raised part, and avoid an inaccurate detection result caused by the poor attachment. In addition, the raised part of the antenna is located in the gap, so that wear on the raised part of the antenna can be mitigated, and wear on the corner of the antenna can be mitigated.

With reference to the third aspect, in some possible implementations, the fixture further includes a stop part. The stop part is connected to the first surface. The stop part is located on a side of the tray. An end surface that is of the stop part and that faces the tray is perpendicular to the first surface. When the main unit is connected to the tray, the end surface that is of the stop part and that faces the tray is attached to the main unit, and a stop surface can avoid a case in which the main unit and the tray slide relative to each other. The stop surface is attached to the main unit, so that a case in which the main unit tilts in a direction toward the stop surface or tilts in a direction away from the stop surface can be avoided, to improve accuracy of a measurement result. In addition, the stop surface of the stop part further has an indication function. In a process of connecting the main unit and the tray, the stop surface of the stop part abutting against and being attached to the main unit indicates a high degree of attachment between the main unit and the tray and a correct installation attitude, and this helps quick installation of the main unit.

With reference to the third aspect, in some possible implementations, the fixture further includes a strap. One end of the strap is connected to one end that is of the main arm and that is away from the secondary arm, and the other end is detachably connected to one end that is of the secondary arm and that is away from the main arm. Alternatively, one end of the strap is connected to the end that is of the secondary arm and that is away from the main arm, and the other end is detachably connected to the end that is of the main arm and that is away from the secondary arm. Because the secondary arm and the main arm are of a rigid structure, in a binding process, the secondary arm and the main arm that are of the rigid structure may support the strap in winding around an outer periphery of the antenna, and assist in transferring one end of the strap to the other end. In this way, a problem that the flexible strap is not easily transferred due to a large size of the outer periphery of the antenna is effectively resolved. This may be applied to an antenna with a large perimeter, to improve mounting and dismounting efficiency.

With reference to the third aspect, in some possible implementations, the fixture further includes a pad. An extension direction of the pad is parallel to the second surface. The pad is located on a side of the second surface of the main arm. A connecting end of the pad is detachably connected to the secondary arm. A free end of the pad is located on a side that is of the secondary arm and that is close to the main arm. When the fixture is connected to the antenna, the free end of the pad abuts against the antenna. In this way, the pad enables the main arm and the secondary arm to move in the extension direction of the pad, and the tray and the main unit connected to the tray may also move in the extension direction of the pad, so that the main unit is away from the antenna, to avoid a case in which an obstacle such as a component near an antenna, for example, a cable, blocks a signal of the measurement apparatus, so as to improve a measurement effect.

### BRIEF DESCRIPTION OF DRAWINGS

FIG. 1 is a diagram of a structure of a base station;
FIG. 2 is a diagram of a structure of an antenna measurement instrument and an antenna body in a related technology;
FIG. 3 is a diagram of a structure of a measurement device according to an embodiment of this application;
FIG. 4 is a diagram of a structure of a first connecting rod and a cable according to an embodiment of this application;
FIG. 5 is a diagram of a structure of a main unit and a fixture according to an embodiment of this application; and
FIG. 6 is a diagram of a structure of a fixture according to an embodiment of this application.

In the drawings: 20: Antenna; 10: Measurement device; 21: Measurement surface; 100: Measurement apparatus; 200: Fixture; 01: Antenna measurement instrument; 02: Antenna body; 110: Main unit; 120: Support assembly; 121: First connecting rod; 122: Cable; 130: Receiving assembly; 131: Second connecting rod; 132: Signal processor; 133: Receiver; 134: Coaxial cable; 1211: Folding section; 140: Support rod; 160: Elastic member; 101: First assembly surface; 102: Second assembly surface; 103: Third assembly surface; 111: Mounting surface; 150: Positioning part; 210: Fastening arm; 220: Tray; 230: Connector; 211: First surface; 212: Second surface; 213: Main arm; 214: Secondary arm; 215: Gap; 240: Stop part; 241: Stop surface; 250: Pad; 251: Connecting end; 252: Free end; 221: Barrier strip; 23: Raised part; and 260: Strap.

### DESCRIPTION OF EMBODIMENTS

To make objectives, technical solutions, and advantages of this application clearer, the following further describes this application in detail with reference to the accompanying drawings.

The terms "first", "second", and the like below are used merely for the purpose of description, and shall not be construed as indicating or implying relative importance or implying a quantity of indicated technical features. Therefore, features defined by "first", "second", or the like may explicitly or implicitly include one or more features. In the descriptions of this application, unless otherwise stated, "a plurality of" means two or more.

In addition, in this application, position terms such as "above" and "below" are defined relative to illustrative positions of components in the accompanying drawings. It should be understood that these direction terms are relative concepts and are used for relative description and clarification, and may change correspondingly as positions at which the components in the accompanying drawings are placed.

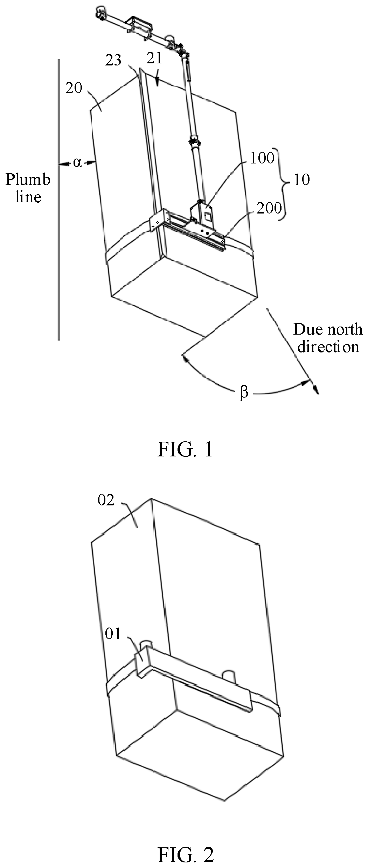

FIG. 1 is a diagram of a structure of a base station. Refer to FIG. 1. The base station includes an antenna 20 and a measurement device 10, and the measurement device 10 is detachably connected to the antenna 20. The antenna 20 has a measurement surface 21, and the measurement surface 21 is a plane. The measurement device 10 is attached to the measurement surface 21. When an attitude of the antenna 20 needs to be measured, the measurement device 10 is connected to the antenna 20, the measurement device 10 is attached to the measurement surface 21, and the measurement device 10 measures the attitude of the antenna 20. After the measurement is completed, the measurement device 10 is separated from the antenna 20.

As shown in FIG. 1, the measurement device 10 includes a fixture 200 and a measurement apparatus 100. The fixture 200 is detachably connected to the measurement apparatus 100. The fixture 200 is detachably connected to the antenna 20. When the attitude of the antenna 20 needs to be measured, the fixture 200 is first connected to the antenna 20, and the fixture 200 is attached to the measurement surface 21. Then, the fixture 200 is connected to the measurement apparatus 100, so that the measurement apparatus 100 is parallel to the measurement surface 21.

In this embodiment of this application, data of the antenna 20 measured by the measurement device 10 is not shown. For example, the measurement device 10 is configured to measure an included angle α between the measurement surface 21 of the antenna 20 and a vertical direction, where the included angle α is also referred to as a downtilt (downtilt). The measurement device 10 is further configured to measure an azimuth (azimuth) β of the antenna 20.

The downtilt is an included angle between a to-be-measured antenna and a plumb line. The downtilt directly affects a beam shape on the ground and is a key parameter. Sources of an error of the downtilt include production and assembly precision of the measurement apparatus 100, a clamping and fastening deviation at a measurement site, electrical performance of the measurement apparatus 100, and the like. The azimuth is an included angle between a direction of a to-be-measured antenna and a due north direction.

FIG. 2 is a diagram of a structure of an antenna measurement instrument 01 and an antenna body 02 in a related technology. Refer to FIG. 2. The antenna measurement instrument 01 is detachably connected to the antenna body 02. In a measurement process, the antenna measurement instrument 01 may be blocked, leading to an inaccurate measurement result. In addition, poor attachment between the antenna measurement instrument 01 and the antenna body 02 may cause an inaccurate measurement result.

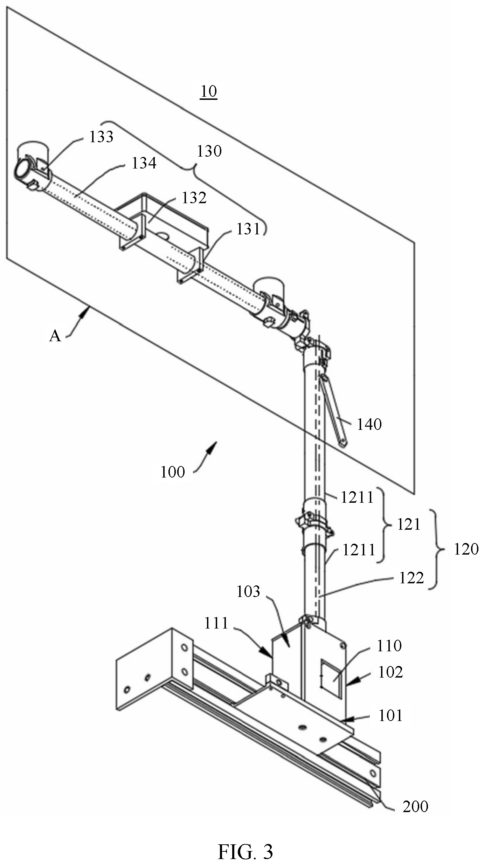

FIG. 3 is a diagram of a structure of the measurement device 10 according to an embodiment of this application. Refer to FIG. 3. The measurement apparatus 100 includes a main unit 110, a support assembly 120, and a receiving assembly 130. The main unit 110 is connected to the support assembly 120, and the receiving assembly 130 is connected to the support assembly 120.

The support assembly 120 includes a first connecting rod 121 and a cable 122 (shown by dashed lines), and the first connecting rod 121 is connected to the cable 122. A connection mode of the first connecting rod 121 and the cable 122 is not limited in embodiments of this application. In some embodiments, the cable 122 is buried in the first connecting rod 121. In this way, the cable 122 is better accommodated in the first connecting rod 121, to avoid clutter in the support assembly 120. In some other embodiments, the cable 122 is wound around the outside of the first connecting rod 121, to facilitate maintenance and replacement of the cable 122. One end of the first connecting rod 121 is connected to the main unit 110, and one end of the cable 122 is electrically connected to the main unit 110.

The receiving assembly 130 includes a second connecting rod 131, a receiver 133, a signal processor 132, and a coaxial cable 134 (shown by dashed lines). The receiver 133, the signal processor 132, and the coaxial cable 134 are all connected to the second connecting rod 131. One end of the coaxial cable 134 is connected to the signal processor 132, and the other end is connected to the receiver 133. One end that is of the first connecting rod 121 and that is away from the main unit 110 is rotatably connected to the second connecting rod 131. One end that is of the cable 122 and that is away from the main unit 110 is electrically connected to the signal processor 132.

Because one end of the coaxial cable 134 is connected to the signal processor 132, and the other end is connected to the receiver 133, a signal received by the receiver 133 may be transmitted to the signal processor 132. One end of the cable 122 is electrically connected to the main unit 110, and the other end of the cable 122 is electrically connected to the signal processor 132, so that the signal of the signal processor 132 may be transmitted to the main unit 110. Because the first connecting rod 121 is rotatably connected to the second connecting rod 131, the first connecting rod 121 and the second connecting rod 131 can be folded, to provide high flexibility and facilitate storage. In addition, a length of the first connecting rod 121 and the second connecting rod 131 that are in an expanded state is greater than a length of the first connecting rod 121 and the second connecting rod 131 that are in a folded state, and a distance between the receiver 133 and the main unit 110 may be adjusted by expanding or folding the first connecting rod 121 and the second connecting rod 131. During use of the measurement apparatus 100, the first connecting rod 121 and the second connecting rod 131 may be expanded based on an obstacle (for example, a cable or a utility pole) that blocks a signal of the receiver 133 at a base station, to adjust a position of the receiver 133, so as to avoid blocking the signal of the receiver 133, and improve accuracy of measurement data.

In addition, generally, a bending radius of the coaxial cable 134 is greater than 20 mm (micrometers), and is far greater than a bending radius of 10 mm of the cable of a folding mechanism. The coaxial cable 134 is connected to the second connecting rod 131. In this way, the coaxial cable 134 may not cross a position at which the first connecting rod 121 is rotatably connected to the second connecting rod 131, and the coaxial cable 134 may not be bent. The bending radius of the cable 122 crossing the first connecting rod 121 and the second connecting rod 131 is small, and may be far less than 10 mm. In this way, in the measurement apparatus 100 provided in this application, there is a large selective range for a bending radius of the position at which the first connecting rod 121 is rotatably connected to the second connecting rod 131, and the bending radius may not even be limited.

The foregoing bending radius is a curvature radius. Using the coaxial cable 134 as an example, the coaxial cable 134 is bent to a limit to form an arc, and a radius of the arc is a bending radius. Alternatively, a shorter segment of the coaxial cable 134 is replaced with an arc segment, and a radius of the arc segment is a bending radius.

In embodiments of this application, the receiver 133 is also referred to as a GPS (global positioning system). In an example in FIG. 3, the receiving assembly 130 includes two receivers 133 and two coaxial cables 134. The two receivers 133 and the two coaxial cables 134 are all connected to the second connecting rod 131. One receiver 133 is connected to the signal processor 132 through one coaxial cable 134. The two receivers 133 are respectively located at two opposite ends of the second connecting rod 131.

A connection mode of the coaxial cable 134 and the second connecting rod 131 is not limited in embodiments of this application. In some embodiments, the coaxial cable 134 is buried in the second connecting rod 131. In some other embodiments, the coaxial cable 134 is located outside the second connecting rod 131, and the coaxial cable 134 is connected to the second connecting rod 131 through a binding member.

A rotatable connection mode of the first connecting rod 121 and the second connecting rod 131 is not limited in embodiments of this application. For example, the first connecting rod 121 is rotatably connected to the second connecting rod 131 through a hinge.

In FIG. 3, the first connecting rod 121 includes a plurality of folding sections 1211. Two adjacent folding sections 1211 are rotatably connected to each other. The main unit 110 is connected to a head end of the plurality of folding sections 1211, and the second connecting rod 131 is connected to a tail end of the plurality of folding sections 1211. In this way, a length of the first connecting rod 121 can be adjusted by rotating two adjacent folding sections 1211, to further reduce a volume of the measurement apparatus 100, so that the measurement apparatus 100 can be flexibly packed, transported, and moved to and from the base station. Before use, a single person may quickly expand the measurement apparatus 100 to two to three times of an original volume, and the receiver 133 may avoid an obstacle, for example, a top cover of a to-be-measured antenna. In addition, if the receiver 133 is located in a main radiation region in front of the to-be-measured antenna, a signal received by the receiver 133 is electromagnetically interfered by the main radiation region, affecting a measurement result. In embodiments of this application, the length of the first connecting rod 121 may be adjusted by rotating two adjacent folding sections 1211, so that the receiver 133 connected to the second connecting rod 131 avoids the main radiation region in front of the antenna, to improve anti-electromagnetic interference and anti-blocking capabilities of the measurement apparatus 100.

The head end of the plurality of folding sections 1211 is an end of a folding section 1211 that is closest to the main unit 110 in the plurality of folding sections 1211, so that the head end of the plurality of folding sections 1211 is one end that is of the first connecting rod 121 and that is close to the main unit 110. The tail end of the plurality of folding sections 1211 is an end of a folding section 1211 that is farthest away from the main unit 110 in the plurality of folding sections 1211, so that the tail end of the plurality of folding sections 1211 is one end that is of the first connecting rod 121 and that is away from the main unit 110.

It may be understood that, in another embodiment, the first connecting rod 121 may be telescopically disposed, so that the length of the first connecting rod 121 may also be adjusted. For example, the first connecting rod 121 includes a plurality of telescopic sections. Two adjacent telescopic sections are slidably connected to each other. The main unit 110 is connected to a head end of the plurality of telescopic sections, and the second connecting rod 131 is connected to a tail end of the plurality of telescopic sections. Similarly, the length of the first connecting rod 121 may be adjusted by sliding two adjacent telescopic sections. This helps the receiver 133 avoid the main radiation region in front of the antenna, to improve the anti-electromagnetic interference and anti-blocking capabilities of the measurement apparatus 100.

Similarly, the head end of the plurality of telescopic sections is an end of a telescopic section that is closest to the main unit in the plurality of telescopic sections, so that the head end of the plurality of telescopic sections is one end that is of the first connecting rod and that is close to the main unit. The tail end of the plurality of telescopic sections is an end of a telescopic section that is farthest away from the main unit in the plurality of telescopic sections, so that the tail end of the plurality of telescopic sections is one end that is of the first connecting rod and that is away from the main unit.

In the example in FIG. 3, the measurement apparatus 100 further includes a support rod 140. One end of the support rod 140 is rotatably connected to the first connecting rod 121, and the other end of the support rod 140 is detachably connected to the second connecting rod 131. In this way, when the first connecting rod 121 and the second connecting rod 131 are expanded to be in a working state, the support rod 140 and the second connecting rod 131 are connected to form a stable triangle between the support rod 140, the first connecting rod 121, and the second connecting rod 131, so as to avoid a case in which a signal received by the receiver 133 is affected due to relative movement of the first connecting rod 121 and the second connecting rod 131 in a measurement process. Alternatively, in another embodiment, one end of the support rod 140 is rotatably connected to the second connecting rod 131, and the other end of the support rod 140 is detachably connected to the first connecting rod 121. This can also stabilize the first connecting rod 121 and the second connecting rod 131.

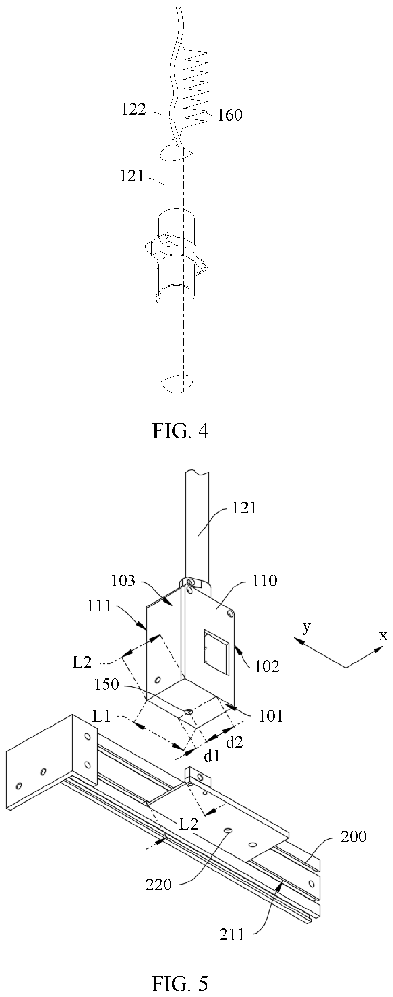

FIG. 4 is a diagram of a structure of a first connecting rod 121 and a cable 122 according to an embodiment of this application. In FIG. 4, the measurement apparatus 100 further includes an elastic member 160, and two opposite ends of the elastic member 160 are both connected to the cable 122. When the elastic member 160 is in a free state, a portion that is of the cable 122 and that is located between the two opposite ends of the elastic member 160 is bent. In this way, when the elastic member 160 is in a stretching state, the part that is of the cable 122 and that is located between the two opposite ends of the elastic member 160 is stretched by the elastic member 160.

For example, when the first connecting rod 121 and the second connecting rod 131 are expanded from being in the folded state to being in the expanded state, the elastic member 160 is stretched in the free state, and a bent portion that is of the cable 122 and that is located between two opposite ends of the elastic member 160 is also stretched. In this way, a case in which the cable 122 is broken or damaged because the cable 122 is subject to an excessive force during expansion of the first connecting rod 121 and the second connecting rod 131 is avoided. In addition, the elastic member 160 restricts movement of the cable 122, to avoid a case in which extension is affected by coiling of the cable 122.

In some embodiments, both the elastic member 160 and the cable 122 are located in the first connecting rod 121, to facilitate storage, and avoid coiling of the elastic member 160 and the cable 122 around a component, for example, the second connecting rod 131. For example, the elastic member 160 is a spring.

As described above, during installation of the measurement apparatus 100, the measurement apparatus 100 is parallel to the measurement surface 21 (as shown in FIG. 1). The main unit 110 includes a mounting surface 111 (as shown in FIG. 3). During use, the mounting surface 111 is attached to the fixture 200, and the fixture 200 is attached to the measurement surface 21.

In some embodiments of this application, a quantity of installation attitudes of the measurement apparatus 100 may be adjusted, to avoid a case in which an obstacle (for example, a utility pole or a cable) near the antenna 20 blocks a signal of the measurement apparatus 100. The following provides an example for description with reference to FIG. 5.

FIG. 5 is a diagram of a structure of the main unit 110 and the fixture 200 according to an embodiment of this application. In FIG. 5, the main unit 110 has three assembly surfaces: a first assembly surface 101, a second assembly surface 102, and a third assembly surface 103. The first assembly surface 101 is located at one end that is of the main unit 110 and that is away from the first connecting rod 121. The second assembly surface 102 and the third assembly surface 103 are disposed opposite to each other, and both the second assembly surface 102 and the third assembly surface 103 are perpendicular to the mounting surface 111.

In an installation process, the mounting surface 111 is attached to one surface of the fixture 200, and any one of the first assembly surface 101, the second assembly surface 102, and the third assembly surface 103 is attached to another surface of the fixture 200. In other words, two surfaces of the main unit 110 are respectively attached to two surfaces of the fixture 200. In this way, it can be ensured that the mounting surface 111 and the fixture 200 do not deviate, to avoid inaccurate measurement of data, for example, a downtilt and an azimuth, caused by deviation of the mounting surface 111 and the fixture 200. In addition, any one of the first assembly surface 101, the second assembly surface 102, and the third assembly surface 103 is attached to the fixture 200, so that the measurement apparatus 100 and the fixture 200 have at least three installation attitudes. For example, in FIG. 5, any one of the first assembly surface 101, the second assembly surface 102, and the third assembly surface 103 may be installed facing downward. An installation attitude may be selected based on an installation site, to better avoid an obstacle, for example, a cable, reduce interference, and improve accuracy of a measurement result.

Return to FIG. 3. In some embodiments of this application, both an extension direction of the first connecting rod 121 and an extension direction of the second connecting rod 131 are parallel to the mounting surface 111. As described above, the first connecting rod 121 is rotatably connected to the second connecting rod 131. In this way, in a process in which the first connecting rod 121 and the second connecting rod 131 rotate relative to each other, the extension direction of the first connecting rod 121 and the extension direction of the second connecting rod 131 change. However, the extension direction of the first connecting rod 121 and the extension direction of the second connecting rod 131 remain on a same plane. Both the extension direction of the first connecting rod 121 and the extension direction of the second connecting rod 131 are on a plane A in FIG. 3. In other words, in the folded state, the extension direction of the first connecting rod 121 and the extension direction of the second connecting rod 131 are on the plane A, and in the expanded state, the first connecting rod 121 and the second connecting rod 131 are on the plane A. It is clear that an extension direction of the coaxial cable 134 is on the plane A. In addition, because the first assembly surface 101, the second assembly surface 102, and the third assembly surface 103 are all perpendicular to the mounting surface 111, the first assembly surface 101, the second assembly surface 102, and the third assembly surface 103 are all perpendicular to the plane A.

When the mounting surface 111 is attached to one surface of the fixture 200, and any one of the first assembly surface 101, the second assembly surface 102, and the third assembly surface 103 is attached to another surface of the fixture 200, the plane A is parallel to the mounting surface 111. In addition, because one end of the second connecting rod 131 and the first connecting rod 121 are connected to form a cantilever structure, and the receiver 133 is located on the second connecting rod 131, gravity of the receiver 133 causes the coaxial cable 134 and the second connecting rod 131 to have a downward bending moment. Because the plane A is parallel to the mounting surface 111, the bending moment has a component force only on the plane A, and a component force on a plane on which the downtilt exists is zero. This does not affect a value of the downtilt measured by the receiver 133, so that the measurement is accurate.

Three installation attitudes of the measurement apparatus 100 are described by using an example in which the measurement apparatus 100 and the fixture 200 shown in FIG. 3 are connected. In a first installation attitude, the mounting surface 111 of the main unit 110 is attached to the fixture 200, and the first assembly surface 101 faces downward and is attached to the fixture 200, so that the two receivers 133 are spaced apart in a horizontal direction. In a second installation attitude, the mounting surface 111 of the main unit 110 is attached to the fixture 200, and the second assembly surface 102 faces downward and is attached to the fixture 200, so that the two receivers 133 are spaced apart in a vertical direction. In a third installation attitude, the mounting surface 111 of the main unit 110 is attached to the fixture 200, and the third assembly surface 103 faces downward and is attached to the fixture 200, so that the two receivers 133 are spaced apart in the vertical direction. In the second installation attitude and the third installation attitude, orientations of the two receivers 133 are opposite. In the foregoing three installation attitudes, distribution directions of the two receivers 133 are both on the plane A. Regardless of the orientations of the two receivers 133, downtilts and azimuths are equal. When the installation attitude is switched, the downtilt and the azimuth may be obtained without additional calculation.

It may be understood that the first assembly surface 101 being perpendicular to the plane A does not limit an included angle between the first assembly surface 101 and the plane A being 90°. For example, the included angle between the first assembly surface 101 and the plane A may be 85° to 95°, for example, may be 85°, 86°, 87°, 88°, 90°, 92°, 93°, or 95°. An included angle between the second assembly surface 102 and the plane A and an included angle between the third assembly surface 103 and the plane A are similar to this. The following descriptions about verticality and the like are similar to this. Details are not described again.

In an example in FIG. 5, the measurement apparatus 100 further includes a positioning part 150. The measurement apparatus 100 is connected to the fixture 200 through the positioning part 150. The positioning part 150 is connected to the assembly surface. For example, the positioning part 150 is connected to any one of the first assembly surface 101, the second assembly surface 102, and the third assembly surface 103. A distance d1 between the positioning part 150 and the mounting surface 111 is not equal to a distance d2 between the positioning part 150 and a surface that is of the main unit 110 and that faces away from the mounting surface 111.

An example in which the positioning part 150 is connected to the first assembly surface 101 is used. The measurement apparatus 100 is connected to the fixture 200 through the positioning part 150, and the mounting surface 111 is attached to the fixture 200. When the mounting surface 111 is attached to the fixture 200, the positioning part 150 is connected to the fixture 200. If the mounting surface 111 faces away from and is not attached to the fixture 200, because d1 is not equal to d2, the positioning part 150 cannot be connected to the fixture 200. Whether the measurement apparatus 100 is correctly installed is determined depending on whether the positioning part 150 can be connected to the fixture 200, so that the positioning part 150 has a fool-proof function, to avoid an incorrect measurement result caused by an abnormal installation manner.

A structure of the positioning part 150 is not limited in embodiments of this application. The structure is configured based on a connection mode of the measurement apparatus 100 and the fixture 200. In some embodiments, the positioning part 150 may be a threaded hole. The measurement apparatus 100 is connected to the fixture 200 through a bolt. In some other embodiments, the positioning part 150 may be of a structure like a snap fastener.

For ease of description, it is defined that an x direction is perpendicular to the mounting surface 111, a y direction is perpendicular to the second assembly surface 102, and the y direction is perpendicular to the third assembly surface 103.

In the example in FIG. 5, a size of the mounting surface 111 in the y direction is L1, and sizes of the first assembly surface 101, the second assembly surface 102, the third assembly surface 103 in the x direction are all L2. L1 is not equal to L2.

When a size of a position that is of the fixture 200 and at which the measurement apparatus 100 is installed is L2, any one of the first assembly surface 101, the second assembly surface 102, and the third assembly surface 103 may be installed at the foregoing position. Because L1 is not equal to L2, and the size of the mounting surface 111 is not equal to the size of the position that is of the fixture 200 and at which the measurement apparatus 100 is installed, the mounting surface 111 cannot be installed at the position that is of the fixture 200 and at which the foregoing assembly surface is installed. This can avoid a case in which the mounting surface 111 is attached to the position that is of the fixture 200 and that is for attaching to any one of the first assembly surface 101, the second assembly surface 102, and the third assembly surface 103, to avoid incorrect installation of the fixture 200 and the main unit 110. In this way, the size L1 of the mounting surface 111 in the y direction is not equal to the sizes L2 of the first assembly surface 101, the second assembly surface 102, and the third assembly surface 103 in the x direction, so that a fool-proof function is achieved.

In some embodiments, the main unit 110 may perform measurement based on the assembly surface attached to the fixture 200. For example, the main unit 110 processes data received by the signal processor 132. For example, a data processing manner includes: determining an installation attitude of the main unit 110 based on a signal received by the receiver 133, and then correcting and compensating for, based on the installation attitude, the data received by the receiver 133. In this way, deviations introduced into phases such as assembly or use in different installation attitudes are balanced, and accuracy is maximized. For example, a type of correction and compensation is used for the first installation attitude, another type of correction and compensation is used for the second installation attitude, and still another type of correction and compensation is used for the third installation attitude.

In another embodiment of this application, the measurement apparatus 100 and the fixture 200 may have only one installation attitude. For example, only one of the first assembly surface 101, the second assembly surface 102, and the third assembly surface 103 is connected to the fixture 200. For example, only the first assembly surface 101 is connected to the fixture 200. Alternatively, the measurement apparatus 100 and the fixture 200 may be provided with two installation attitudes. For example, both the second assembly surface 102 and the third assembly surface 103 may be connected to the fixture 200.

As described above, the measurement apparatus 100 is connected to the antenna 20 through the fixture 200. The fixture 200 needs to ensure relative stability of the measurement apparatus 100 and the antenna 20.

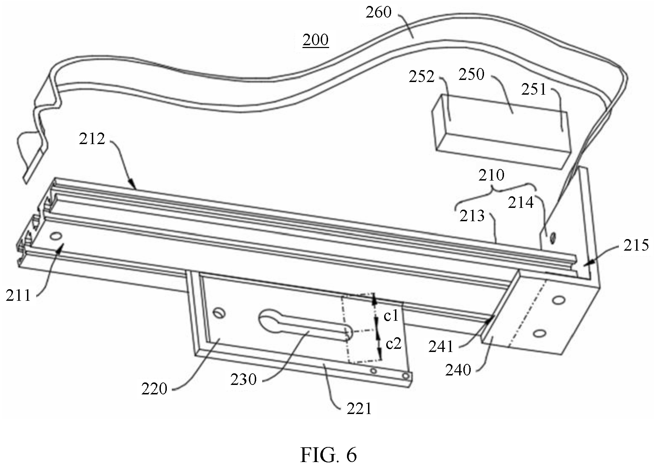

FIG. 6 is a diagram of a structure of the fixture 200 according to an embodiment of this application. In FIG. 6, the fixture 200 includes a fastening arm 210, a tray 220, and a connector 230. The main unit 110 is detachably connected to the tray 220, and the connector 230 is detachably connected to the positioning part 150 (as shown in FIG. 5). The fastening arm 210 includes a first surface 211 and a second surface 212. The first surface 211 and the second surface 212 are disposed opposite to each other and parallel to each other. The tray 220 is connected to the first surface 211, and the tray 220 is connected to the connector 230.

A distance between the connector 230 and the first surface 211 is c1. A distance between the connector 230 and an end that is of the tray 220 and that is away from the fastening arm 210 is c2. c1 is not equal to c2. When the main unit 110 is connected to the tray 220, the main unit 110 is attached to the first surface 211, and the mounting surface 111 of the main unit 110 is attached to the first surface 211.

Because c1 is not equal to c2, when the mounting surface 111 is attached to the first surface 211, the connector 230 can be connected to the positioning part 150. If the surface that is of the main unit 110 and that faces away from the mounting surface 111 is attached to the first surface 211, the connector 230 cannot be connected to the positioning part 150. In this way, whether the measurement apparatus 100 and the fixture 200 are correctly installed is determined depending on whether the connector 230 can be connected to the positioning part 150, so that the connector 230 has a fool-proof function, to avoid an incorrect measurement result caused by an abnormal installation manner.

In embodiments of this application, the end that is of the tray 220 and that is away from the fastening arm 210 is an end of the tray 220 that is attached to the assembly surface (for example, the first assembly surface 101) of the main unit 110 (as shown in FIG. 5) and that is away from the fastening arm 210. For example, in some embodiments, the fixture 200 may further be provided with a barrier strip 221. The barrier strip 221 protrudes from a surface of the tray 220, and the barrier strip 221 is connected to the tray 220. When the tray 220 is connected to the main unit 110, the barrier strip 221 is not attached to the assembly surface (for example, the first assembly surface 101) of the main unit 110. It is clear that the distance c2 between the connector 230 and the end that is of the tray 220 and that is away from the fastening arm 210 does not include a size of the barrier strip 221.

A connection mode of the tray 220 and the first surface 211 is not limited in embodiments of this application. In some embodiments, a connection mode of the tray 220 and the first surface 211 is a detachable connection mode, for example, snap fitting or a threaded connection. The tray 220 may be detached from a main arm 213 for ease of carrying. Alternatively, in some other embodiments, a connection mode of the tray 220 and the first surface 211 is a fixed connection mode, for example, welding.

In some embodiments, a plurality of connection positions for connecting to the tray 220 may be provided on the first surface 211 based on a requirement, and the plurality of connection positions are spaced apart in an extension direction of the main arm 213. One of the plurality of connection positions may be selected, based on a blocking status of an obstacle near the antenna 20, for connecting to the tray 220.

A structure of the connector 230 is not limited in embodiments of this application, and may be configured based on a connection mode of the positioning part 150 and the connector 230. For example, in an embodiment in which the positioning part 150 is threadedly connected to the connector 230, the connector 230 may be configured as a hole structure. In an embodiment in which the positioning part 150 is connected to the connector 230 in a snap-fitting manner, the connector 230 may be of a structure like a snap fastener. In an example in FIG. 6, the connector 230 is a strip-shaped hole, and a screw passes through the strip-shaped hole and is connected to the positioning part 150 (as shown in FIG. 5). For example, in a process in which the positioning part 150 is connected to the connector 230, the screw is connected to the positioning part 150, the screw slides in the strip-shaped hole until the main unit 110 and the tray 220 are correctly installed, and then the screw is fastened. In this way, the strip-shaped hole has a function of adjusting relative positions between the main unit 110 and the tray 220.

In the example in FIG. 6, the fastening arm 210 includes the main arm 213 and a secondary arm 214. Two opposite surfaces of the main arm 213 are respectively the first surface 211 and the second surface 212. One end of the secondary arm 214 is connected to the first surface 211. The other end of the secondary arm 214 extends to a side of the second surface 212 of the main arm 213. The main arm 213 and the secondary arm 214 are connected to form an L shape. There is a gap 215 between the secondary arm 214 and an end surface that is of the main arm 213 and that is close to the secondary arm 214. When the fixture 200 is attached to the antenna 20, the first surface 211 is attached to the main unit 110 of the measurement apparatus 100, the second surface 212 of the main arm 213 is attached to the measurement surface 21 of the antenna 20, and the secondary arm 214 abuts against the antenna 20.

Return to FIG. 1. In some use scenarios, there may be a raised part 23 at a transition position between a surface that is of the antenna 20 and that abuts against the main arm 213 and a surface that is of the antenna 20 and that abuts against the secondary arm 214. Because there is the gap 215 between the secondary arm 214 and the end surface that is of the main arm 213 and that is close to the secondary arm 214, the gap 215 may accommodate the raised part 23 of the antenna 20, to avoid poor attachment between the second surface 212 and the measurement surface 21 that is caused by existence of the raised part 23, and avoid an inaccurate detection result caused by the poor attachment. In addition, the raised part 23 is located in the gap 215, so that wear on the raised part 23 of the antenna 20 can be mitigated, and wear on a corner of the antenna 20 is mitigated.

In the example in FIG. 6, the fastening arm 210 is an L-shaped structure. The main arm 213 is of a thin-plate shape, and the secondary arm 214 is of a thin-plate shape. The main arm 213 and the secondary arm 214 are perpendicular to each other. The L-shaped structure has a large area. For the antenna 20, both the measurement surface 21 and a side surface adjacent to the measurement surface 21 are attached to the L-shaped structure. Pressure on the antenna 20 is smaller, especially for an antenna whose housing material is plastic, for example, glass fiber, so that clamping deformation of the antenna housing is reduced. Materials of the main arm 213 and the secondary arm 214 are not limited in embodiments of this application. In some embodiments, to reduce weights of the main arm 213 and the secondary arm 214, the materials of the main arm 213 and the secondary arm 214 may be aluminum alloy profiles.

In FIG. 6, the fixture 200 further includes a stop part 240, and the stop part 240 is connected to the first surface 211. The stop part 240 is located on a side of the tray 220, and an end surface that is of the stop part 240 and that faces the tray 220 is perpendicular to the first surface 211. When the main unit 110 is connected to the tray 220, the end surface that is of the stop part 240 and that faces the tray 220 is attached to the main unit 110. For ease of description, the end surface that is of the stop part 240 and that faces the tray 220 is defined as a stop surface 241, and the stop surface 241 is perpendicular to the first surface 211. When the main unit 110 is connected to the tray 220, the stop surface 241 is attached to the main unit 110.

For example, when the main unit 110 is connected to the fixture 200 shown in FIG. 6 in the attitude shown in FIG. 5, the mounting surface 111 of the main unit 110 is attached to the first surface 211 (as shown in FIG. 6). The first assembly surface 101 is attached to the tray 220, and the second assembly surface 102 is attached to the stop surface 241.

When the main unit 110 is connected to the tray 220, the stop surface 241 of the stop part 240 can avoid a case in which the main unit 110 and the tray 220 slide relative to each other. The stop surface 241 is attached to the main unit 110, so that a case in which the main unit 110 tilts in a direction toward the stop surface 241 or tilts in a direction away from the stop surface 241 can be avoided, to improve accuracy of a measurement result. In addition, the stop surface 241 of the stop part 240 further has an indication function. In a process of connecting the main unit 110 and the tray 220, the stop surface 241 of the stop part 240 abutting against and being attached to the main unit 110 indicates a high degree of attachment between the main unit 110 and the tray 220 and a correct installation attitude, and this helps quick installation of the main unit 110.

The stop part 240 is connected to the first surface 211, and the secondary arm 214 is also connected to the first surface 211. In some embodiments, as shown in FIG. 6, the secondary arm 214 and the stop part 240 are connected to form an integrally formed part. It may be understood that, in another embodiment, the secondary arm 214 and the stop part 240 may be disposed independently. For example, the secondary arm 214 is spaced apart from the stop part 240. Alternatively, the secondary arm 214 and the stop part 240 may be respectively located on two sides of the tray 220.

In the example in FIG. 6, the fixture 200 further includes a pad 250, and an extension direction of the pad 250 is parallel to the second surface 212. The pad 250 has two opposite ends, one end is a connecting end 251, and the other end is a free end 252. The pad 250 is located on a side of the second surface 212 of the main arm 213. The connecting end 251 of the pad 250 is detachably connected to the secondary arm 214. The free end 252 of the pad 250 is located on a side that is of the secondary arm 214 and that is close to the main arm 213.

Because the pad 250 is located on the side of the second surface 212 of the main arm 213, the antenna 20 and the pad 250 are located on a same side of the main arm 213. When the fixture 200 is connected to the antenna 20, the free end 252 of the pad 250 abuts against the antenna 20. In this way, the pad 250 enables the main arm 213 and the secondary arm 214 to move in the extension direction of the pad 250, and a part in which the main arm 213 is attached to the antenna 20 also moves correspondingly. The tray 220 and the main unit 110 connected to the tray 220 may also move in the extension direction of the pad 250, to cause the main unit 110 and the receiver 133 connected to the main unit 110 to be away from the antenna 20. When it is ensured that the main arm 213 is attached to the antenna 20 and the main unit 110 is connected to the fixture 200, the measurement apparatus 100 may measure data, and a case in which an obstacle, such as a component near an antenna 20, for example, a cable, blocks a signal of the measurement apparatus 100 can be avoided, to improve a measurement effect.

For example, if the secondary arm 214 is connected to the pad 250, a signal of the measurement apparatus 100 connected to the tray 220 may be blocked by an obstacle. The secondary arm 214 is connected to the pad 250, and the tray 220 and the measurement apparatus 100 move together in the extension direction of the pad 250, where a movement distance is a size of the pad 250 in the extension direction. In this way, blockage of a signal of the measurement apparatus 100 by an obstacle is reduced.

A connection mode of the pad 250 and the secondary arm 214 is not limited in embodiments of this application. For example, the pad 250 is connected to the secondary arm 214 in a detachable manner, for example, snap fitting or a threaded connection. This facilitates detachment of the pad 250 and the secondary arm 214 for ease of carrying. In addition, whether to install the pad 250 and the secondary arm 214 may be determined depending on whether an obstacle exists near the antenna 20.

As described above, in an embodiment in which the plurality of connection positions for connecting to the tray 220 are provided on the first surface 211, one of the plurality of connection positions may be selected, based on a blocking status of an obstacle near the antenna 20, for connecting to the tray 220, and the pad 250 is disposed, so that more relative positions between the measurement apparatus 100 and the antenna 20 may be provided for selection, and a relative position with fewer obstacles is selected. In this way, impact of an obstacle on a measurement result is further reduced.

When the fastening arm 210 abuts against the antenna 20, to ensure a stable connection between the fixture 200 and the antenna 20, in some embodiments, the fixture 200 further includes a strap 260. One end of the strap 260 is connected to one end that is of the main arm 213 and that is away from the secondary arm 214, and the other end is detachably connected to one end that is of the secondary arm 214 and that is away from the main arm 213. In this way, the strap 260 can bind the main arm 213 and the secondary arm 214 to the antenna 20, to achieve a stability function, so as to avoid inaccurate measurement affected by a position relationship between the antenna 20 and the measurement apparatus 100 due to deviation between the fixture 200 and the antenna 20.

In addition, in a process of installing the fixture 200, a measurement person may hold the end that is of the secondary arm 214 and that is away from the main arm 213, wind the strap 260 around the antenna 20, and then connect the end that is of the secondary arm 214 and that is away from the main arm 213 to the strap 260. In this way, a perimeter of the antenna 20 is equal to a sum of a length of the main arm 213, a length of the secondary arm 214, and a length of the strap 260. In the process of installing the fixture 200 by the measurement person, if a size of an outer periphery of the antenna 20 is large, one end of the strap 260 may not be easily transferred to the other end due to flexibility. Because the secondary arm 214 and the main arm 213 are of a rigid structure, in a binding process, the secondary arm 214 and the main arm 213 that are of the rigid structure may support the strap 260 in winding around the outer periphery of the antenna 20, and assist in transferring one end of the strap 260 to the other end. In this way, a problem that the flexible strap 260 is not easily transferred due to the large size of the outer periphery of the antenna 20 is effectively resolved. This may be applied to an antenna with a large perimeter, to improve mounting and dismounting efficiency.

For example, if a sum of the lengths of the secondary arm 214 and the main arm 213 is 30 cm (centimeters), in the process of installing the fixture 200, the measurement person holds the end that is of the secondary arm 214 and that is away from the main arm 213. A distance between a position of the flexible strap 260 and a handheld part is 30 cm, so that the flexible strap 260 may be pulled to wind around the outer periphery of the antenna 20 to be connected to the handheld part. In this way, rigid support capabilities of the secondary arm 214 and the main arm 213 can be fully used, to improve the mounting and dismounting efficiency.

A detachable connection mode of the strap 260 and the end that is of the secondary arm 214 and that is away from the main arm 213 is not limited in embodiments of this application. For example, a nut is disposed at the end that is of the secondary arm 214 and that is away from the main arm 213, and an end of the strap 260 is provided on the nut, to implement the detachable connection between the strap 260 and the end that is of the secondary arm 214 and that is away from the main arm 213. The nut occupies less space, and if there is an obstacle near the antenna 20, the nut may pass through a gap between the obstacle and the antenna 20, to increase an applicable range of the fixture 200.

Alternatively, in some embodiments, one end of the strap 260 is connected to the end that is of the secondary arm 214 and that is away from the main arm 213, and the other end is detachably connected to the end that is of the main arm 213 and that is away from the secondary arm 214. This also has an advantage of accurate measurement.

The measurement device 10 provided in embodiments of this application is not limited to being configured to measure installation data of the antenna 20. It may be understood that the measurement device 10 may be configured to measure an angle of another structure, for example, configured to measure an angle of a building structure. The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A measurement apparatus, wherein the measurement apparatus comprises:
a main unit;
a support assembly, comprising a first connecting rod and a cable that are connected to each other, wherein one end of the first connecting rod is connected to the main unit, and one end of the cable is electrically connected to the main unit; and
a receiving assembly, comprising a receiver, a signal processor, a second connecting rod, and a coaxial cable, wherein the coaxial cable, the signal processor, and the receiver are all connected to the second connecting rod; one end of the coaxial cable is electrically connected to the receiver, and the other end is electrically connected to the signal processor; one end that is of the first connecting rod and that is away from the main unit is rotatably connected to the second connecting rod; and one end that is of the cable and that is away from the main unit is electrically connected to the signal processor.

2. The measurement apparatus according to claim 1, wherein the first connecting rod comprises a plurality of folding sections, two adjacent folding sections are rotatably connected to each other, the main unit is connected to a head end of the plurality of folding sections, and the second connecting rod is connected to a tail end of the plurality of folding sections.

3. The measurement apparatus according to claim 1, wherein the first connecting rod comprises a plurality of telescopic sections, two adjacent telescopic sections are slidably connected to each other, the main unit is connected to a head end of the plurality of telescopic sections, and the second connecting rod is connected to a tail end of the plurality of telescopic sections.

4. The measurement apparatus according to any one of claims 1 to 3, wherein the support assembly further comprises an elastic member, two opposite ends of the elastic member are both connected to the cable, and when the elastic member is in a free state, the cable located between the two opposite ends of the elastic member is bent.

5. The measurement apparatus according to any one of claims 1 to 4, wherein the main unit comprises a mounting surface and an assembly surface, the assembly surface is perpendicular to the mounting surface, a size of the mounting surface is L1 in a direction perpendicular to the assembly surface, a size of the assembly surface is L2 in a direction perpendicular to the mounting surface, and L1 is not equal to L2.

6. The measurement apparatus according to claim 5, wherein both an extension direction of the first connecting rod and an extension direction of the second connecting rod are parallel to the mounting surface.

7. The measurement apparatus according to claim 5 or 6, wherein the main unit further comprises a positioning part, the positioning part is connected to the assembly surface, and a distance between the positioning part and the mounting surface is not equal to a distance between the positioning part and a surface that is of the main unit and that faces away from the mounting surface.

8. The measurement apparatus according to any one of claims 5 to 7, wherein there are a plurality of assembly surfaces, and each of the assembly surfaces is perpendicular to the mounting surface.

9. The measurement apparatus according to any one of claims 1 to 8, wherein the measurement apparatus further comprises a support rod, one end of the support rod is rotatably connected to the first connecting rod, and the other end is detachably connected to the second connecting rod; or
one end of the support rod is rotatably connected to the second connecting rod, and the other end is detachably connected to the first connecting rod.

10. A measurement device, wherein the measurement device comprises a fixture and the measurement apparatus according to any one of claims 1 to 9, and the fixture is detachably connected to the measurement apparatus.

11. The measurement device according to claim 10, wherein the fixture comprises a fastening arm, a tray, and a connector, the fastening arm comprises a first surface and a second surface that are disposed opposite to each other and parallel to each other, the tray is connected to the first surface, the connector is connected to the tray, and a distance between the connector and the first surface is not equal to a distance between the connector and an end that is of the tray and that is away from the fastening arm; and
the main unit is detachably connected to the tray, and when the main unit is connected to the tray, the main unit is attached to the first surface.

12. The measurement device according to claim 11, wherein the fastening arm comprises a main arm and a secondary arm; two opposite surfaces of the main arm are respectively the first surface and the second surface; one end of the secondary arm is connected to the first surface, and the other end extends to a side of the second surface; and there is a gap between the secondary arm and an end surface that is of the main arm and that is close to the secondary arm.

13. The measurement device according to claim 12, wherein the fixture further comprises a pad, an extension direction of the pad is parallel to the second surface, the pad is located on a side of the second surface of the main arm, a connecting end of the pad is detachably connected to the secondary arm, and a free end of the pad is located on a side that is of the secondary arm and that is close to the main arm.

14. The measurement device according to claim 12 or 13, wherein the fixture further comprises a strap; and one end of the strap is connected to one end that is of the main arm and that is away from the secondary arm, and the other end is detachably connected to one end that is of the secondary arm and that is away from the main arm; or one end of the strap is connected to one end that is of the secondary arm and that is away from the main arm, and the other end is detachably connected to one end that is of the main arm and that is away from the secondary arm.

15. The measurement device according to any one of claims 11 to 14, wherein the fixture further comprises a stop part, the stop part is connected to the first surface, the stop part is located on a side of the tray, an end surface that is of the stop part and that faces the tray is perpendicular to the first surface, and when the main unit is connected to the tray, the end surface that is of the stop part and that faces the tray is attached to the main unit.

16. A fixture, wherein the fixture comprises:
a fastening arm, wherein the fastening arm comprises a first surface and a second surface that are disposed opposite to each other and parallel to each other;
a tray, wherein the tray is connected to the first surface; and
a connector, wherein the connector is connected to the tray, and a distance between the connector and the first surface is not equal to a distance between the connector and an end that is of the tray and that is away from the fastening arm.

17. The fixture according to claim 16, wherein the fastening arm comprises a main arm and a secondary arm; two opposite surfaces of the main arm are respectively the first surface and the second surface; one end of the secondary arm is connected to the first surface, and the other end extends to a side of the second surface; and there is a gap between the secondary arm and an end surface that is of the main arm and that is close to the secondary arm.

18. The fixture according to claim 16 or 17, wherein the fixture further comprises a stop part, the stop part is connected to the first surface, the stop part is located on a side of the tray, and an end surface that is of the stop part and that faces the tray is perpendicular to the first surface.
